# EUROPEAN PATENT SPECIFICATION

(11) **EP 4 493 505 B1**
(45) Date of publication and mention of the grant of the patent: **03.12.2025**
(21) Application number: 23712846.7
(22) Date of filing: 16.03.2023
(51) Int. Cl.: B66B 23/14, B66B 23/12

(54) **SELF-LOCKING STRUCTURE OF THREADED CONNECTION**
SELBSTSICHERNDE STRUKTUR EINER SCHRAUBVERBINDUNG
STRUCTURE AUTOBLOQUANTE DE RACCORD FILETÉ

(30) Priority: 17.03.2022 CN 202210265431
(43) Date of publication of application: 22.01.2025
(73) Proprietor: TK Elevator Innovation and Operations GmbH, 40472 Düsseldorf (DE)
(72) Inventor: SCHLEITER, Georg, 22765 Hamburg (DE); HAAG, Martin, 22307 Hamburg (DE); KRÄMER, Reinhardt, 22303 Hamburg (DE); THELE, Randolf, 22049 Hamburg (DE); TRESP, Benno, 18246 Bützow (DE); MÜNCHOW, Moritz Tim, 25355 Barmstedt (DE)
(74) Representative: Jacobi, Nicolas
(86) International application number: PCT/EP2023/056802
(87) International publication number: WO 2023/175103

(56) References cited:
- WO-A1-2020/011597
- CN-A- 107 215 761
- CN-A- 107 473 052
- US-B1- 6 405 848

## Description

### Technical Field

The invention relates to an installation structure of a step roller assembly of an escalator, particularly to a step roller assembly assembled in a self-locking threaded connection.

### Background

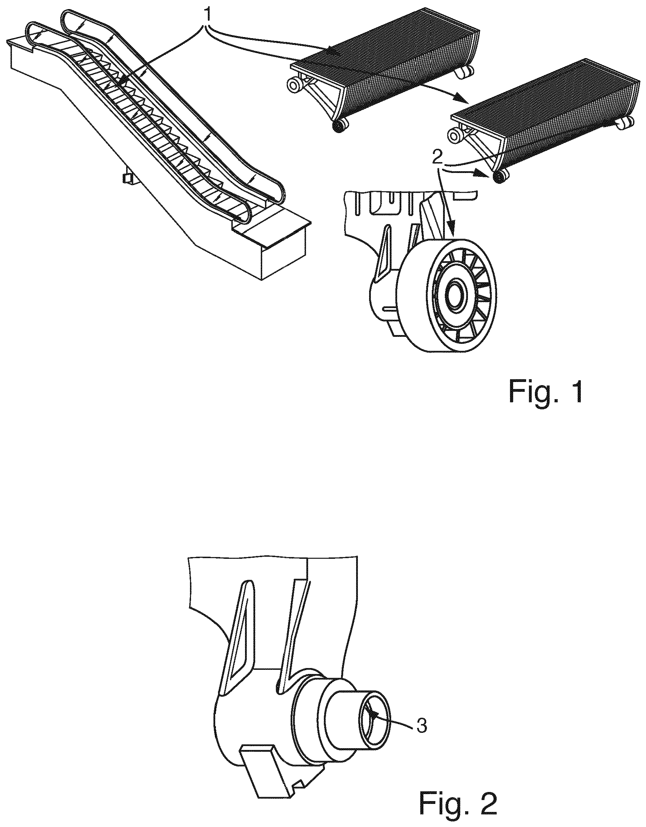

Fig. 1 shows an escalator and its die-casted step 1, with the partial enlarged view showing the installation position of a step roller 2. Fig. 2 shows a mounting shaft 3 for mounting a rolling bearing.

As shown in Fig. 1, the escalator includes many die-casted steps 1. Each die-casted step 1 has a mounting shaft 3 on both sides. The step roller 2 is installed on the mounting shaft 3 through a rolling bearing, wherein an inner ring of the rolling bearing is installed on the radial outer surface of the mounting shaft 3, and an outer ring of the rolling bearing can be installed on the inner surface of an inner hole of the step roller 2.

The step roller 2 is fixed to the mounting shaft 3 with the connection composed of standard mechanical components (a bolt 4, a washer 5 and a nut 6).

For a traditional step roller assembly of an escalator, in the assembly process, it is necessary to screw one of the bolt and the nut while fixing the other, so the assembly operation is inconvenient, resulting in low production efficiency, thus increasing the product cost. In addition, since the fit between the nut and the bolt may loosen for various reasons, such as vibration, it would lead to loosening of nut and thus failure.

The information disclosed in the background part of the invention is only intended to strengthen the understanding of the general background technology of the invention, and shall not be deemed to recognize or imply in any form that the information constitutes the prior art known to those skilled in the art.

CN107215761 A discloses a self-locking structure of threaded connection according to the preamble of claim 1.

### Summary of the Invention

The invention aims to provide a step roller assembly of an escalator, which can conveniently and accurately position nuts during assembly, so as to improve the production efficiency and reduce the cost, and prevent the failure caused by the loosening of nuts.

Specifically, the invention provides a self-locking structure of threaded connection for installing a step roller of an escalator on a step, comprising:
the step having a mounting shaft on which the step roller is installed through a rolling bearing, wherein the inner ring of the rolling bearing is installed on the mounting shaft, and the step roller is installed on the outer ring of the rolling bearing,
a threaded connection structure comprising a bolt, a washer and a nut,
wherein the mounting shaft has a through hole along its axis line direction, the bolt passes through the washer, the through hole and the nut, and the washer presses the inner ring of the rolling bearing on the mounting shaft through the tightening engagement between the bolt and the nut,
wherein a countersunk slot hole for placing the nut is formed at the end of the through hole such that the bolt passes through the nut located in the countersunk slot hole, the sidewall of the countersunk slot hole includes a bottom face and two side faces symmetrical to each other, thereby forming a U-shaped structure in which three sides of the sidewall are closed and one side is open, and when the nut falls in the U-shaped structure and is positioned by the bottom face and the two sides, the hole of the nut is exactly aligned with the through hole.

In the above self-locking structure of threaded connection, preferably, the countersunk slot hole further comprises a rib which protrudes from the outer end of the bottom face to cover a part of the countersunk slot hole with the aim of being a axial limit stop for the nut.

In the above self-locking structure of threaded connection, preferably, the step is a die-casted step formed by die-casting, and the countersunk slot hole is integrally die-casting molded with the step. Further preferably, the die-casted step is molded by die-casting of *castable metallic materials, such as* metal aluminum or aluminum alloy.

With the help of the self-locking structure of threaded connection of the invention, the step roller assembly of the escalator can be assembled quickly and simply, which shortens the assembly time and thus reduce the product cost. Moreover, the self-locking structure of threaded connection of the invention also has the function of preventing the loosening of the threaded connection, thereby improving the reliability of the escalator.

Since the step of the escalator is molded by die-casting of *castable metallic materials, such as* metal aluminum or aluminum alloy, with the help of the easy die-casting characteristics of *castable metallic materials,* good molding accuracy can be ensured with high production efficiency. The *castable metallic materials* also has good strength performance and light weight, which helps to reduce weight, reduce operating energy consumption and ensure sufficient mechanical strength.

The apparatus of the invention has features and advantages that will be apparent from the drawings incorporated herein and subsequent detailed embodiments, or will be set forth in detail in the drawings incorporated herein and subsequent detailed embodiments, which are jointly used to explain the specific principles of the invention.

### Brief Description of Drawings

Fig. 1 shows an escalator, step structure of an escalator, and installation position of a step roller on a step.
Fig. 2 shows a mounting shaft of a step for mounting a rolling bearing.
Fig. 3 is a sectional view showing an assembly structure in which a step roller of an escalator according to the invention is installed on a die-casted step.
Fig. 4 shows the positional relationship in which a nut is embedded in the slot of a step in the assembly relationship shown in Fig. 3.
Fig. 5 is a sectional view showing a countersunk slot hole for a self-locking nut on a die-casted step of an escalator according to the invention.

It should be understood that the drawings are not necessarily to be drawn to scale, but show various features of the basic principles of the present invention, which have been simplified to some extent. The specific design features of the invention disclosed herein, including, for example, specific dimensions, orientation, positioning and shape, will be determined in part by the application and use environment for a specific purpose.

In these drawings, in a plurality of figures throughout the drawings, reference numerals refer to the same or equivalent parts of the invention.

### Detailed Description of Embodiments

Specific reference will now be made to various embodiments of the present invention, and examples of these embodiments are shown in the drawings and the following description. Although the invention is described in combination with exemplary embodiments, it should be understood that this description is not intended to limit the invention to those exemplary embodiments. On the contrary, the invention is intended to cover not only these exemplary embodiments, but also various alternatives, modifications, equivalent forms and other embodiments that may be included within the scope of the invention as defined by the appended claims.

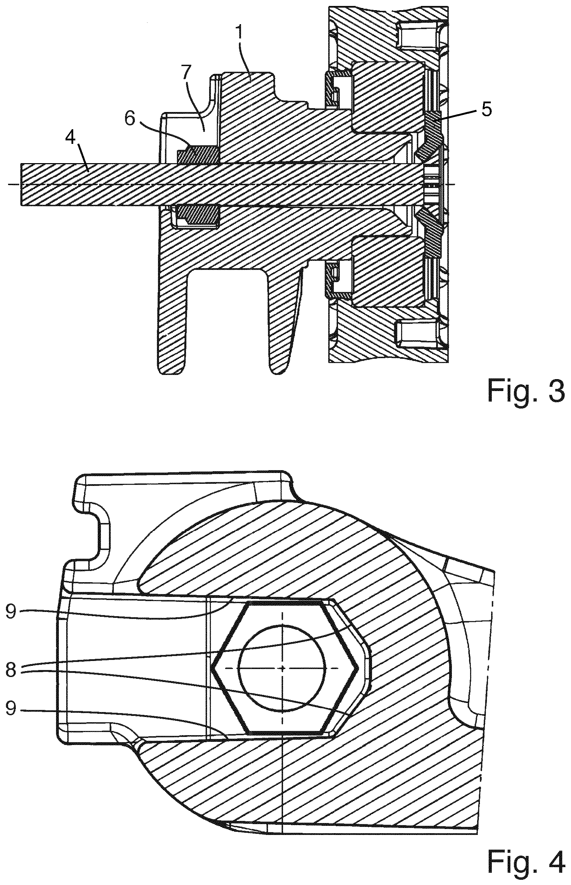

Fig. 3 is a sectional view showing an assembly structure in which a step roller of an escalator according to the invention is installed on a die-casted step.

The step of the invention is preferably a die-casted step, especially a die-casted step molded by die-casting of *castable metallic materials, such as* metal aluminum or aluminum alloy. The castable metallic materials is easy to die cast, and can ensure good molding accuracy with high production efficiency. The castable metallic materials also has good strength performance and light weight, which helps to reduce weight, reduce operating energy consumption and ensure sufficient mechanical strength.

As shown in Fig. 3, the step roller 2 of the escalator is installed on the mounting shaft 3 of the die-casted step 1 through a rolling bearing. The bolt 4 passes through the washer 5, the through hole of the die-casted step 1 and the nut 6, and the washer 5 presses the inner ring of the rolling bearing against the mounting shaft 3 of the die-casted step 1 by tightening engagement between the bolt 4 and the nut 6.

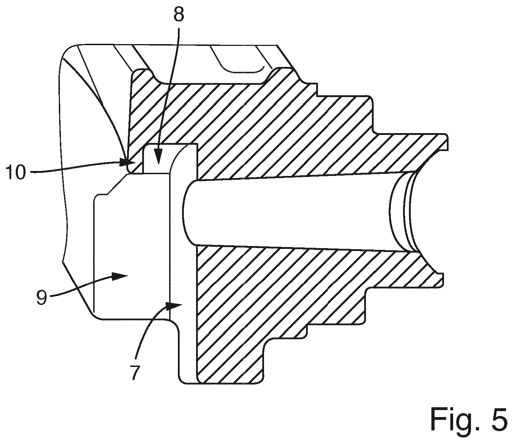

With reference to Figs. 4, 5, it can be seen that the nut 6 of the invention is embedded in the countersunk slot hole 7 formed on the die-casted step 1. As shown in Figs. 4, 5, the countersunk slot hole 7 is formed at the end of the through hole of the die-casted step 1 such that the bolt 4 can pass through the nut 6 located in the countersunk slot hole 7.

The sidewall of the countersunk slot hole 7 includes a bottom face 8 and two side faces 9 symmetrical to each other, and both ends of the bottom face 8 are connected with one side face 9, respectively, thereby forming a U-shaped structure with three closed sides and one open side of the sidewall. The shape of the U-shaped structure matches the side shape of the nut such that when the nut is placed in the U-shaped structure and is positioned by the bottom face 8 and the two side faces 9, the hole of the nut is exactly aligned with the through hole of the die-casted step 1.

Due to the positioning effect of the U-shaped structure on the nut, the nut can be conveniently placed in an accurate position during assembly, and during the assembly, only the bolt is tightened without adjusting the radial position of the nut, such that the assembly efficiency is improved.

Since the shape of the U-shaped structure matches the side shape of the nut, the two sides 9 restrict the rotation of the nut, such that the nut is prevented from loosening in use, thus playing a self-locking role. Therefore, the die-casted step 1 with the countersunk slot hole 7 forms a self-locking structure of threaded connection together with the bolt 4, the washer 5 and the nut 6.

A rib 10 can be provided at the bottom face 8 close to the outer end of the countersunk slot hole 7. That is, the rib 10 protrudes from the outer end of the bottom face 8 to cover a part of the countersunk slot hole 7.

The rib 10 prevents axial displacement of the nut 6 during tightening. Once the first thread of the bolt 4 begins to engage with the nut 6, the nut 6 can no longer disengage from its desired position. Since there is no need to worry about the axial displacement of the nut, the assembly efficiency is further improved. That is, during assembly, the bottom face 8, the two side faces 9 and the rib 10 of the countersunk slot hole 7 define the position of the nut in both radial direction and axial direction. In this way, when preparing for assembly, just by placing the nut from the open side of the U-shaped structure of the countersunk slot hole 7, accurate axial and radial positioning of the nut can be realized.

The structure of the countersunk slot hole 7 (including the rib 10) of the invention is directly formed in the step by a die-casting die. Its structure is conducive to efficient and high-precision molding. This not only ensures the manufacturing efficiency, but also reduces the production cost.

The foregoing description of the specific exemplary embodiments of the invention is for the purpose of explanation and description. The foregoing description does not want to be exhaustive, nor to limit the invention to the precise form disclosed. Obviously, many changes and variations are possible within the scope of the appended claims.

The purpose of selecting and describing exemplary embodiments is to explain the specific principles and practical applications of the invention, so that other skilled persons in the art can realize and utilize various exemplary embodiments of the invention and various selection forms and modification forms. The scope of the invention is defined by the appended claims.

## Claims

1. A self-locking structure of threaded connection for installing a step roller (2) of an escalator on a step (1), comprising:
the step (1) having a mounting shaft (3) on which the step roller (2) is installed through a rolling bearing, wherein an inner ring of the rolling bearing is installed on the mounting shaft (3), and the step roller (2) is installed on an outer ring of the rolling bearing,
a threaded connection structure comprising a bolt (4), a washer (5) and a nut (6),
wherein the mounting shaft (3) has a through hole along its axis line direction, the bolt (4) passes through the washer (5), the through hole and the nut (6), and the washer (5) presses the inner ring of the rolling bearing against the mounting shaft (3) through the tightening engagement between the bolt (4) and the nut (6),
**characterized in that** a countersunk slot hole (7) for placing the nut (6) is formed at the end of the through hole such that the bolt (4) passes through the nut (6) located in the countersunk slot hole (7), the sidewall of the countersunk slot hole (7) includes a bottom face (8) and two side faces (9) symmetrical to each other, thereby forming a U-shaped structure in which three sides of the sidewall are closed and one side is open, and when the nut (6) is placed in the U-shaped structure and is positioned by the bottom face (8) and the two side faces (9), the hole of the nut (6) is exactly aligned with the through hole.

2. The self-locking structure of threaded connection according to claim 1, wherein the countersunk slot hole (7) further comprises a rib (10) which protrudes from an outer end of the bottom surface (8) to cover a part of the countersunk slot hole (7) with the aim of being a axial limit stop for the nut (6).

3. The self-locking structure of threaded connection according to claim 1, wherein the step (1) is a die-casted step molded through die-casting, and the countersunk slot hole (7) is integrally die-casting molded with the step (1).

4. The self-locking structure of threaded connection according to claim 3, wherein the die-casted step is molded by *castable metallic materials.*

## Patentansprüche

1. Selbstsichernde Struktur einer Gewindeverbindung zum Installieren einer Stufenrolle (2) einer Fahrtreppe an einer Stufe (1), umfassend:
wobei die Stufe (1) eine Montagewelle (3) aufweist, an der die Stufenrolle (2) durch ein Wälzlager installiert ist, wobei ein Innenring des Wälzlagers an der Montagewelle (3) montiert ist und die Stufenrolle (2) an einem Außenring des Wälzlagers installiert ist,
eine Gewindeverbindungsstruktur, umfassend einen Bolzen (4), eine Unterlegscheibe (5) und eine Mutter (6), wobei die Montagewelle (3) entlang ihrer Achslinienrichtung ein Durchgangsloch aufweist, der Bolzen (4) durch die Unterlegscheibe (5), das Durchgangsloch und die Mutter (6) hindurchgeht und die Unterlegscheibe (5) den Innenring des Wälzlagers durch den Festzieheingriff zwischen dem Bolzen (4) und der Mutter (6) gegen die Montagewelle (3) drückt,
**dadurch gekennzeichnet, dass** am Ende des Durchgangslochs ein Senkschlitzloch (7) zum Platzieren der Mutter (6) gebildet ist, so dass der Bolzen (4) durch die in dem Senkschlitzloch (7) befindliche Mutter (6) hindurchgeht, wobei die Seitenwand des Senkschlitzlochs (7) eine Bodenfläche (8) und zwei zueinander symmetrische Seitenflächen (9) aufweist, wodurch eine U-förmige Struktur gebildet wird, in der drei Seiten der Seitenwand geschlossen sind und eine Seite offen ist, und wenn die Mutter (6) in die U-förmige Struktur platziert wird und durch die Bodenfläche (8) und die beiden Seitenflächen (9) positioniert wird, das Loch der Mutter (6) präzise am Durchgangsloch ausgerichtet ist.

2. Selbstsichernde Struktur einer Gewindeverbindung nach Anspruch 1, wobei das Senkschlitzloch (7) ferner eine Rippe (10) umfasst, die von einem äußeren Ende der Bodenfläche (8) vorsteht, um einen Teil des Senkschlitzlochs (7) mit dem Ziel abzudecken, ein axialer Endanschlag für die Mutter (6) zu sein.

3. Selbstsichernde Struktur einer Gewindeverbindung nach Anspruch 1, wobei die Stufe (1) eine durch Druckguss geformte druckgegossene Stufe ist und das Senkschlitzloch (7) integral mit der Stufe (1) druckgegossen ist.

4. Selbstsichernde Struktur einer Gewindeverbindung nach Anspruch 3, wobei die druckgegossene Stufe durch gießfähige metallische Materialien geformt ist.

## Revendications

1. Structure autobloquante de raccord fileté pour installer un rouleau de marche (2) d'un escalator sur une marche (1), comprenant :
la marche (1) ayant un arbre de montage (3) sur lequel le rouleau de marche (2) est installé par le biais d'un palier à roulement, dans laquelle une bague intérieure du palier à roulement est installée sur l'arbre de montage (3), et le rouleau de marche (2) est installé sur une bague extérieure du palier à roulement,
une structure de raccord fileté comprenant un boulon (4), une rondelle (5), et un écrou (6), dans laquelle l'arbre de montage (3) a un trou traversant le long de sa direction de ligne axiale, le boulon (4) passe à travers la rondelle (5), le trou traversant, et l'écrou (6), et la rondelle (5) presse la bague intérieure du palier à roulement contre l'arbre de montage (3) par le biais de l'entrée en prise de resserrage entre le boulon (4) et l'écrou (6),
**caractérisée en ce qu'**un trou-encoche fraisé (7) pour placer l'écrou (6) est formé à l'extrémité du trou traversant de manière telle que le boulon (4) passe à travers l'écrou (6) situé dans le trou-encoche fraisé (7), la paroi latérale du trou-encoche fraisé (7) inclut une face inférieure (8) et deux faces latérales (9) symétrique l'une à l'autre, formant ainsi une structure en forme de U dans laquelle trois côtés de la paroi latérale sont fermés et un côté est ouvert, et, lorsque l'écrou (6) est placé dans la structure en forme de U et est positionné par la face inférieure (8) et les deux faces latérales (9), le trou de l'écrou (6) est aligné exactement avec le trou traversant.

2. Structure autobloquante de raccord fileté selon la revendication 1, dans laquelle le trou-encoche fraisé (7) comprend en outre une nervure (10) qui fait saillie à partir d'une extrémité extérieure de la surface inférieure (8) pour couvrir une partie du trou-encoche fraisé (7) dans le but d'être une butée de fin de course axiale pour l'écrou (6).

3. Structure autobloquante de raccord fileté selon la revendication 1, dans laquelle la marche (1) est une marche coulée sous pression, moulée par le biais de coulage sous pression, et le trou-encoche fraisé (7) est moulé par coulage sous pression de façon monobloc avec la marche (1).

4. Structure autobloquante de raccord fileté selon la revendication 3, dans laquelle la marche coulée sous pression est moulée en utilisant des matériaux métalliques coulables.
